# EUROPEAN PATENT APPLICATION

(11) **EP 4 455 205 A1**
(43) Date of publication of application: **30.10.2024**
(21) Application number: 23780592.4
(22) Date of filing: 28.03.2023
(51) Int. Cl.: C08L 23/10, C08J 5/06, C08L 1/02, C08L 23/26

(54) **CELLULOSE FIBER-REINFORCED RESIN COMPOSITE, METHOD FOR MANUFACTURING CELLULOSE FIBER-REINFORCED RESIN COMPOSITE, AND CELLULOSE FIBER-REINFORCED RESIN MOLDED BODY**

(30) Priority: 29.03.2022 JP 2022054017
(71) Applicant: FURUKAWA ELECTRIC CO., LTD., Tokyo 100-8322 (JP)
(72) Inventor: KIM, Jae Kyung, Tokyo 100-8322 (JP); KINOSHITA, Hiroki, Tokyo 100-8322 (JP); IKURA, Yukihiro, Tokyo 100-8322 (JP); NAKAJIMA, Yasuo, Tokyo 100-8322 (JP); SUYAMA, Kenichi, Tokyo 100-8322 (JP)
(74) Representative: Forstmeyer, Dietmar
(86) International application number: PCT/JP2023/012647
(87) International publication number: WO 2023/190583

(57) **Abstract**

A cellulose fiber reinforced resin composition, containing a thermoplastic resin containing a polyolefin resin and an alkoxysilane-modified polypropylene resin, and 101 to 400 mass parts of cellulose fibers based on 100 mass parts of the thermoplastic resin, wherein, in planar view observation, a total area of aggregates of the cellulose fibers is 1.00 mm²/cm² or less;
a method of producing this cellulose fiber reinforced resin composition; and
a cellulose fiber reinforced resin formed body.

## Description

### FIELD OF THE INVENTION

The present invention relates to a cellulose fiber reinforced resin composition, a method of producing a cellulose fiber reinforced resin composition, and a cellulose fiber reinforced resin formed body.

### BACKGROUND OF THE INVENTION

A cellulose fiber is a natural resource that is included in every plant, and thus, may be considered as inexhaustible, and has also been examined for an application in automobile components and structural materials by being compounded with a resin, since it is light in weight and high in strength.

However, for a practical application of a cellulose fiber reinforced resin, it is necessary to sufficiently enhance an integrity between the cellulose fiber high in hydrophilicity and a resin high in hydrophobicity, such as a polyolefin resin, and an improvement in strengthening (reinforcement) effect of the resin by the cellulose fiber is limited.

Therefore, in order to enhance the strengthening effect by the cellulose fiber, there has recently been proposed to improve an adherence in an interface between the cellulose fiber and the hydrophobic resin by adding a compatibilizer.

For example, Patent Literature 1 discloses a cellulose fiber reinforced resin composition comprising a polypropylene resin, an alkoxysilane-modified polypropylene resin, and cellulose fibers. According to this resin composition, mechanical strength is less likely to degrade in an environment with high temperature and high humidity.

In order to realize a sustainable society, the momentum to move away from plastic has recently been increasing worldwide. As materials that reduce the amount of plastic used as much as possible and achieve a reduction in the environmental load, resin compositions containing a large amount of cellulose fibers as wood materials are attracting attention.

Regarding cellulose fiber reinforced resin compositions, studies have been conducted so far mainly on resin compositions in which a small amount of cellulose fibers are dispersed in a resin. However, from the viewpoint of reducing the environmental load (carbon neutrality), attempts have been made to replace plastic with wood materials as much as possible. That is, the creation of resin compositions containing a large amount of cellulose fibers (e.g., 50 mass% or more of the resin composition) is desired, and efforts are underway to make this a reality.

For example, Patent Literature 2 discloses a resin composition comprising 50 to 85 mass parts of cellulose fibers based on the total of the cellulose fibers and a synthetic resin, which is taken as 100 mass parts. According to this resin composition, a surface that can be colored stably and freely can be formed.

### CITATION LIST

### PATENT LITERATURES

Patent Literature1: WO 2022/014539
Patent Literature 2: JP-A-2020-158751 ("JP-A" means an unexamined published Japanese patent application)

### SUMMARY OF THE INVENTION

### TECHNICAL PROBLEM

As a result of examining a method of producing a cellulose fiber reinforced resin composition containing a resin and a large amount of cellulose fibers by blending a compatibilizer, the present inventors have found that there is a limitation in improving the mechanical strength of a cellulose fiber reinforced resin composition obtained when using a generally used compatibilizer, and that even if the mechanical strength of a cellulose fiber reinforced resin composition can be increased to the desired level by using a specific compatibilizer, aggregates of cellulose fibers are visually recognizable in this resin composition. There is a concern that the manifestation of aggregates of cellulose fibers in cellulose fiber reinforced resin compositions may limit the range of application from the viewpoint of aesthetics when they are applied as materials for various formed bodies. Patent Literature 1 has examined appearance defects caused by the formation of aggregates, but has merely examined the suppression of relatively large aggregates, such as those with a maximum diameter of 3 mm.

An object of the present invention is to provide a cellulose fiber reinforced resin composition that has excellent mechanical strength and an excellent appearance and that is appropriate as a material for various formed bodies, and a method of producing the same, as well as a cellulose fiber reinforced resin formed body using the cellulose fiber reinforced resin composition.

### SOLUTION TO PROBLEM

As a result of examining cellulose fiber reinforced resin compositions containing a thermoplastic resin and a large amount of cellulose fibers in order to solve the above technical problems, the present inventors have found that by applying an alkoxysilane-modified polypropylene resin as a compatibilizer and then performing melt-mixing in the presence of water, the mechanical strength of the resulting cellulose fiber reinforced resin composition can be effectively increased, further the formation of aggregates of the cellulose fibers can be effectively suppressed, and an excellent appearance can be obtained. The present invention has reached a completion after repeating further examinations based on the knowledge.

That is, the above-described problems have been solved by the following means.
[1] A cellulose fiber reinforced resin composition, containing:
   a thermoplastic resin containing a polyolefin resin and an alkoxysilane-modified polypropylene resin; and
   101 to 400 mass parts of cellulose fibers based on 100 mass parts of the thermoplastic resin,
   wherein, in planar view observation, a total area of aggregates of the cellulose fibers is 1.00 mm²/cm² or less.
[2] The cellulose fiber reinforced resin composition described in [1], wherein the alkoxysilane-modified polypropylene resin is a graft-modified product of a polypropylene resin which is obtainable by using a silane coupling agent having a group containing an ethylenically unsaturated group and an alkoxysilyl group.
[3] The cellulose fiber reinforced resin composition described in [1] or [2], wherein, in the cellulose fiber reinforced resin composition, a content of the alkoxysilane-modified polypropylene resin is 0.1 to 20 mass%.
[4] The cellulose fiber reinforced resin composition described in any one of [1] to [3], wherein the cellulose fibers are unmodified cellulose fibers.
[5] The cellulose fiber reinforced resin composition described in any one of [1] to [4], wherein the cellulose fibers are a plant-derived cellulose fiber.
[6] The cellulose fiber reinforced resin composition described in any one of [1] to [5], wherein the polyolefin resin contains a polypropylene resin.
[7] The cellulose fiber reinforced resin composition described in any one of [1] to [6], wherein a flexural strength of the cellulose fiber reinforced resin composition is higher than a flexural strength of the polyolefin resin.
[8] The cellulose fiber reinforced resin composition described in any one of [1] to [7], wherein the total area of aggregates of the cellulose fibers is 0.15 to 0.90 mm²/cm².
[9] The cellulose fiber reinforced resin composition described in any one of [1] to [7], wherein the content of the cellulose fibers based on 100 mass parts of the thermoplastic resin is 101 mass parts or more and less than 110 mass parts, the total area of the aggregates of the cellulose fibers is 0.15 to 0.80 mm²/cm², and [the content of the cellulose fibers]/[the content of the alkoxysilane-modified polypropylene resin] is 5 to 55.
[10] The cellulose fiber reinforced resin composition described in any one of [1] to [7], wherein the content of the cellulose fibers based on 100 mass parts of the thermoplastic resin is 110 mass parts or more and less than 130 mass parts, the total area of the aggregates of the cellulose fibers is 0.15 to 0.80 mm²/cm², and [the content of the cellulose fibers]/[the content of the alkoxysilane-modified polypropylene resin] is 5 to 55.
[11] The cellulose fiber reinforced resin composition described in any one of [1] to [7], wherein the content of the cellulose fibers based on 100 mass parts of the thermoplastic resin is 130 mass parts or more and less than 150 mass parts, the total area of the aggregates of the cellulose fibers is 0.15 to 0.80 mm²/cm², and [the content of the cellulose fibers]/[the content of the alkoxysilane-modified polypropylene resin] is 5 to 55.
[12] The cellulose fiber reinforced resin composition described in any one of [1] to [7], wherein the content of the cellulose fibers based on 100 mass parts of the thermoplastic resin is 150 mass parts or more and less than 200 mass parts, the total area of the aggregates of the cellulose fibers is 0.20 to 1.00 mm²/cm², and [the content of the cellulose fibers]/[the content of the alkoxysilane-modified polypropylene resin] is 6 to 20.
[13] The cellulose fiber reinforced resin composition described in any one of [1] to [7], wherein the content of the cellulose fibers based on 100 mass parts of the thermoplastic resin is 200 mass parts or more and less than 280 mass parts, the total area of the aggregates of the cellulose fibers is 0.20 to 1.00 mm²/cm², and [the content of the cellulose fibers]/[the content of the alkoxysilane-modified polypropylene resin] is 6 to 20.
[14] A cellulose fiber reinforced resin formed body, which is obtainable by using the cellulose fiber reinforced resin composition described in any one of [1] to [13].
[15] A method of producing the cellulose fiber reinforced resin composition described in any one of [1] to [13], containing a step of melt-mixing the thermoplastic resin and the cellulose fibers in the presence of water.

In the description of the present invention, any numerical expressions in a style of "...to..." will be used to indicate a range including the lower and upper limits represented by the numerals given before and after "to", respectively.

### ADVANTAGEOUS EFFECTS OF INVENTION

The cellulose fiber reinforced resin composition and cellulose fiber reinforced resin formed body of the present invention have excellent mechanical strength and an excellent appearance, and are appropriate as materials for various formed bodies. The method of producing the cellulose fiber reinforced resin composition of the present invention is a method appropriate for producing the above-described cellulose fiber reinforced resin composition.

### BRIEF DESCRIPTION OF THE DRAWINGS

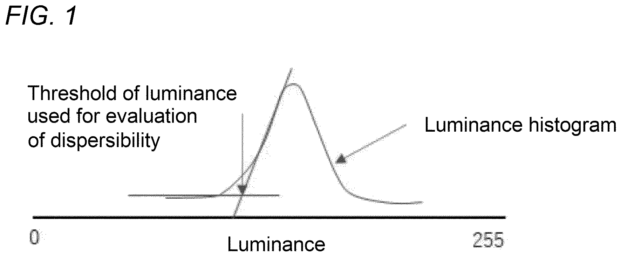

{FIG. 1}
An explanatory diagram showing an example of the threshold of luminance.

### DESCRIPTION OF EMBODIMENTS

### [Cellulose fiber reinforced resin composition]

The cellulose fiber reinforced resin composition of the present invention (hereinafter also referred to as "the resin composition of the present invention") contains a polyolefin resin and an alkoxysilane-modified polypropylene resin as a thermoplastic resin, and contains 101 to 400 mass parts of cellulose fibers based on 100 mass parts of the thermoplastic resin. The resin composition of the present invention has a total area of aggregates of the cellulose fibers is 1.00 mm²/cm² or less in its planar view observation. Because the resin composition of the present invention uses an alkoxysilane-modified polypropylene resin, the strengthening effect of the cellulose fibers can be efficiently brought out, and an excellent appearance can be obtained, as described later.

The cellulose fiber reinforced resin composition of the present invention contains at least a part of a condensate of the alkoxysilane-modified polypropylene resin and the cellulose fibers. More specifically, the cellulose fiber reinforced resin composition of the present invention contains a condensate obtained by a dealcoholization condensation reaction of an alkoxysilyl group in the alkoxysilane-modified polypropylene resin and a hydroxyl group in the cellulose fibers and/or a condensate obtained by a dehydration condensation of a silanol group generated by hydrolysis of the alkoxysilyl group in the alkoxysilane-modified polypropylene resin and a hydroxyl group or the like in the cellulose fibers. In view of this, an adherence in an interface between the alkoxysilane-modified polypropylene resin and the cellulose fibers can be sufficiently enhanced, and as the result, the strengthening effect of the cellulose fibers can be effectively brought out in the resin composition. Furthermore, the cellulose fiber reinforced resin composition of the present invention may contain a condensate by a dealcoholization/dehydration condensation reaction of the alkoxysilyl group/the silanol group. In this case, it is possible to form a network via a reaction site between the alkoxysilane-modified polypropylene resin and the cellulose fibers. The cellulose fiber reinforced resin composition of the present invention may contain an alkoxysilane-modified polypropylene resin that has not developed the dealcoholization/dehydration condensation reaction and cellulose fibers that have not developed the dealcoholization/dehydration condensation reaction. Furthermore, the alkoxysilyl group/the silanol group and the cellulose fibers described above may be bound by hydrogen bonding or the like in addition to the dealcoholization/dehydration condensation reaction.

The resin composition of the present invention has a total area of aggregates of the cellulose fibers is 1.00 mm²/cm² or less in planar view observation. Thus, in the resin composition of the present invention, the formation of aggregates of the cellulose fibers is significantly suppressed, and the resin composition has an excellent appearance when formed as a resin formed body.

The total area of aggregates of the cellulose fibers is preferably 0.90 mm²/cm² or less, more preferably 0.80 mm²/cm² or less, further preferably 0.75 mm²/cm² or less, and further preferably 0.70 mm²/cm² or less. In addition, the total area may be 0.60 mm²/cm² or less, 0.50 mm²/cm² or less, 0.40 mm²/cm² or less, 0.30 mm²/cm² or less, 0.20 mm²/cm² or less, 0.10 mm²/cm² or less, 0.08 mm²/cm² or less, 0.05 mm²/cm² or less, and 0.03 mm²/cm² or less. Since aggregates are preferably not formed, the lower limit of the total area of aggregates is not specifically limited, but is generally 0.01 mm²/cm² or more, and practically 0.10 mm or more.

The total area of aggregates of the cellulose fibers is preferably 0.10 to 1.00 mm²/cm², more preferably 0.15 to 0.90 mm²/cm², further preferably 0.20 to 0.80 mm²/cm², further preferably 0.20 to 0.70 mm²/cm², further preferably 0.20 to 0.60 mm²/cm², and further preferably 0.20 to 0.55 mm²/cm².

The total area of aggregates of the cellulose fibers can be measured by the method described in the Examples.

The total area of aggregates of the cellulose fibers can be controlled within the above range by melt-mixing a thermoplastic resin and cellulose fibers in the presence of water in the method of producing the resin composition of the present invention. The method of producing the resin composition of the present invention will be described later.

The average circular equivalent diameter of aggregates of the cellulose fibers is preferably 0.5 mm or less, more preferably 0.3 mm or less, more preferably 0.29 mm or less, further preferably 0.25 mm or less, and further preferably 0.23 mm or less, in planar view observation. The average circular equivalent diameter can be measured by the method described in the Examples.

The flexural strength of the resin composition of the present invention is preferably higher than that of the same polyolefin resin alone as the polyolefin resin constituting the resin composition of the present invention. The flexural strength of the resin composition of the present invention is preferably 1.2 times or more, more preferably 1.3 times or more, further preferably 1.4 times or more, and particularly preferably 1.5 times or more, the flexural strength of the same polyolefin resin alone as the polyolefin resin constituting the resin composition of the present invention.

The flexural strength is measured in accordance with JIS K7171:2022

Further, the tensile strength of the resin composition of the present invention is preferably higher than that of the same polyolefin resin alone as the polyolefin resin constituting the resin composition of the present invention. The tensile strength of the resin composition of the present invention is preferably 1.1 times or more, more preferably 1.2 times or more, further preferably 1.3 times or more, and particularly preferably 1.5 times or more, the tensile strength of the same polyolefin resin alone as the polyolefin resin constituting the resin composition of the present invention.

The tensile strength is measured in accordance with JIS K7171:2014

Here, "the same polyolefin resin alone as the polyolefin resin constituting the resin composition of the present invention" refers to the polyolefin resin constituting the resin composition of the present invention (polyolefin resin A, described later), and means that an alkoxysilane-modified polypropylene resin and cellulose fibers are not contained. When the composition contains a blend of multiple types of polyolefin resins A, this blend resin is referred to.

The "flexural strength of the same polyolefin resin alone as the polyolefin resin constituting the resin composition of the present invention" and the "tensile strength of the same polyolefin resin alone as the polyolefin resin constituting the resin composition of the present invention" are each measured using a test piece prepared through the same melt-mixing conditions as those of the resin composition of the present invention, except for using only the polyolefin resin constituting the resin composition of the present invention and not using water.

The following describes components of the cellulose fiber reinforced resin composition of the present invention and materials used when the resin composition is prepared.

### (Thermoplastic resin)

The resin composition of the present invention contains, as the thermoplastic resin, a polyolefin resin and an alkoxysilane-modified polypropylene resin. In the present invention, the polyolefin resin is also referred to as base resin.

### -Polyolefin resin-

The polyolefin resin (hereinafter also referred to as polyolefin resin A) is not specifically limited, and may be an olefin homopolymer or an olefin copolymer. Further, a copolymer of an olefin and a monomer other than olefins may also be used. The polyolefin resin preferably contains a propylene component and/or an ethylene component in its polymer structure. The polyolefin resin more preferably contains a polypropylene resin and/or a polyethylene resin, further preferably contains a polypropylene resin, and even more preferably is a polypropylene resin. In the present invention, the term "polypropylene resin" means a polyolefin containing a propylene component, and the polypropylene means to include an ethylene-propylene copolymer (a random copolymer and a block copolymer) besides a propylene homopolymer.

As the polyolefin resin, one type of polyolefin resin or two or more types of polyolefin resins may be used.

Many polyolefin resins have a relatively low melting point, and such polyolefin resins are preferred because the degradation of the cellulose fibers during melt-mixing can be suppressed.

The polyolefin resin used as the base resin has the melt flow rate (MFR) at 230°C under a load of 2.16 kg of preferably 1 to 100 g/10min, preferably 10 to 50 g/10min. Incidentally, the MFR can be measured according to JIS K7210-1:2014.

### -Alkoxysilane-modified polypropylene resin-

The alkoxysilane-modified polypropylene resin acts as a compatibilizer between the base resin and the cellulose fibers.

The alkoxysilane-modified polypropylene resin is preferably a polypropylene resin having an alkoxysilyl group in its main chain or at its end. The alkoxysilane-modified polypropylene resin may be a resin prepared by modifying a polypropylene resin with a silane coupling agent having an alkoxysilyl group (an alkoxysilane compound). That is, the alkoxysilane-modified polypropylene resin can be a resin obtained by the silane coupling agent having the alkoxysilyl group developing a grafting reaction to the polypropylene resin. The alkoxysilane-modified polypropylene resin is preferably a graft-modified product of the polypropylene resin by the silane coupling agent having a group containing an ethylenically unsaturated group and an alkoxysilyl group described later.

The alkoxysilane-modified polypropylene resin can be synthesized by a usual method or a commercial product may be used.

As the polypropylene resin raw material used in the preparation of the alkoxysilane-modified polypropylene resin, the polypropylene resin in the polyolefin resin A described above can be used.

The polypropylene resin used in the preparation of the alkoxysilane-modified polypropylene resin has a melt flow rate (MFR) at 230°C under a load of 2.16 kg of preferably 1 to 50 g/10 min, preferably 1 to 20 g/10 min. The melt flow rate of the polypropylene resin used in the preparation of the alkoxysilane-modified polypropylene resin is preferably smaller than the melt flow rate of the base resin.

The silane coupling agent used for preparing the above-described alkoxysilane-modified polypropylene resin is preferably an alkoxysilane compound having a functional group for grafting. For the silane coupling agent, an agent that has a site (a group or an atom) that can develop a grafting reaction to the polypropylene resin under a presence of radicals generated by decomposition of the organic peroxide and an alkoxysilyl group can be used. Examples of the site that can develop a grafting reaction to the polypropylene resin include a group that contains an ethylenically unsaturated group. Examples of the group containing an ethylenically unsaturated group are not specifically limited, but include, for example, a vinyl group, an allyl group, a (meth)acryloyloxy group, a (meth)acryloyloxy alkylene group, and a p-styryl group. For the alkoxysilyl group, any form of a trialkoxysilyl group, a dialkoxysilyl group, and a monoalkoxysilyl group may be used and it is preferred to use a trialkoxysilane compound. An alkoxy group of the alkoxysilyl group is preferred to have 1 to 6 carbon atoms, and is more preferably a methoxy group and an ethoxy group. For the silane coupling agent, an agent having a group containing an ethylenically unsaturated group and an alkoxysilyl group is preferred. One kind or two or more kinds of the silane coupling agents may be used.

Specific examples of the above-described silane coupling agent include: vinyl silane compounds, such as vinyltrimethoxysilane, vinyltriethoxysilane, vinyltributoxysilane, vinyldimethoxyethoxysilane, vinyldimethoxybutoxysilane, vinyldiethoxybutoxysilane, allyltrimethoxysilane, allyltriethoxysilane, vinyltriacetoxysilane, and trimethoxy(4-vinylphenyl)silane; (meth)acrylic silane compounds, such as 3-(trimethoxysilyl)propyl (meth)acrylate, 3-(methyldimethoxysilyl)propyl (meth)acrylate, 3-(methyldiethoxysilyl)propyl (meth)acrylate, 3-(triethoxysilyl)propyl (meth)acrylate, and 3-(methoxydimethylsilyl)propyl (meth)acrylate; and the like.

Among all, vinyltrimethoxysilane or (trimethoxysilyl)alkyl (meth)acrylate is specifically preferred, and at least one kind of (trimethoxysilyl)alkyl (meth)acrylate and vinyltrimethoxysilane can be used. An alkyl group in the (trimethoxysilyl)alkyl (meth)acrylate is preferred to have 1 to 10 carbon atoms, is more preferred to have 1 to 6 carbon atoms, further preferred to have 2 to 4 carbon atoms, and specifically preferably propyl. From an aspect of enhancing a tensile strength, it is preferred to use 3-(trimethoxysilyl)propyl methacrylate.

For an organic peroxide used for preparing the above-described alkoxysilane-modified polypropylene resin, a compound that generates radicals at least by pyrolysis can be used. These radicals pull out hydrogen atoms from the polypropylene resin or the silane coupling agent to generate a radical reaction (a grafting reaction, an addition reaction) between the silane coupling agent and the polypropylene resin, thereby generating the alkoxysilane-modified polypropylene resin.

For the organic peroxide, those usually used in a radical polymerization reaction can be widely used. For example, benzoyl peroxide, dicumyl peroxide (DCP), 2,5-dimethyl-2,5-di-(tert-butylperoxy)hexane, or 2,5-dimethyl-2,5-di-(tert-butylperoxy)hexane-3 is preferred. One kind or two or more kinds of the organic peroxides may be used.

A decomposition temperature of the organic peroxide is preferably 80°C to 195°C, and is particularly preferably 125°C to 180°C. In the present invention, the decomposition temperature of the organic peroxide means a temperature (a one-minute half-life temperature) at which, when an organic peroxide of a single composition is heated, the organic peroxide itself is decomposed into two or more kinds of compounds at a certain constant temperature or temperature range in one minute to have half a density (mass). Specifically, it can be obtained by thermal analysis, such as a DSC method.

In the preparation of the alkoxysilane-modified polypropylene resin, a grafting rate of the silane coupling agent to the polypropylene resin is not specifically limited as long as it is in a range within which advantageous effects of invention are not impaired. The grafting rate of the silane coupling agent to the alkoxysilane-modified polypropylene resin is, for example, preferably 0.1 to 20 mass%, more preferably 1 to 5 mass%, and particularly preferably 2 to 5 mass%. The grafting rate means the number of mass parts (%) of a graft structure to 100 mass parts (100%) of polypropylene.

The grafting rate can be set within a predetermined range according to a kind or a content of the organic peroxide, kinds and usages of the polypropylene resin and the silane coupling agent as raw materials, and the like.

As for the grafting rate, the alkoxysilane-modified polypropylene resin heated to be melted in a hot xylene is dripped into acetone and reprecipitated to remove an unreacted monomer component and the alkoxysilane-modified polypropylene resin thus reprecipitated and purified is measured by FT-IR, and thus, the graft structure grafted to 100 mass% of the polypropylene can be calculated in a mass% conversion from the intensity ratio of a peak derived from the polypropylene to a peak derived from the graft structure. As for the peaks derived from the alkoxysilyl group in the FT-IR, a peak derived from a Si-O asymmetric stretching vibration can be detected in the proximity of 1100 cm⁻¹, a peak derived from a Si-O bending vibration can be detected in the proximity of 803 cm⁻¹, and a peak derived from a Si-C stretching vibration can be detected at 1193 cm⁻¹.

Preferred forms of the above-described alkoxysilane-modified polypropylene resin can be separated into an aspect (a first aspect) of the alkoxysilane-modified polypropylene resin prepared using a vinyl silane compound and an aspect (a second aspect) of the alkoxysilane-modified polypropylene resin prepared using a (meth)acrylic silane compound from the aspect of the kind of the silane coupling agent used for the preparation.

The alkoxysilane-modified polypropylene resin may have a reaction aid having a vinyl group further grafted to its main chain. While this form can be employed for both the alkoxysilane-modified polypropylene resins of the first aspect and the second aspect, it is preferred to be employed when the alkoxysilane-modified polypropylene resin is of the second aspect.

For the reaction aid having a vinyl group, it is not specifically limited as long as it is a compound (except for those corresponding to the above-described silane coupling agent) having a vinyl group and having a substituent with a resonance stabilization effect for radicals. Here, the compound means not to include a form having a main chain having a recurring unit in its structure.

A Q-value of the reaction aid having a vinyl group is not specifically limited, and can be 0.010 or more, preferably 0.49 to 5.00, more preferably 0.54 to 5.00, more preferably 0.54 to 4.38, more preferably 0.8 to 4.38, and more preferably 0.96 to 4.38. Here, the Q-value means a parameter relating to a resonance effect of a monomer in a radical copolymerization reaction by two kinds of monomers. In the present invention, specific Q-values of the respective reaction aids are based on the descriptions in documents, such as "Plastic Material Dictionary" Q-e value (https://www.plastics-material.com/q-e%e5%80%a4/). For the significance of the Q-value in the radical polymerization reaction, Takayuki OTSU, Structure and Reactivity of Monomers, Relationship between Empirical Parameters and Radical Polymerization Reactivities, Synthetic Organic Chemistry, Volume 28 Issue 12, pp. 1183 to 1196, 1970 can be referred to. This document describes that a conjugated monomer with a large Q-value is high in reactivity as a monomer in one hand, its radical is low in reactivity and a non-conjugated monomer with a small Q-value is low in reactivity as a monomer in one hand, its radical is high in reactivity. It is also described, for example, that the Q-value can be calculated from a reaction rate constant of a propagation reaction in the radical copolymerization reaction with styrene using the styrene as a reference of 1.0. By referring to a method described in this document, Q-values of compounds whose Q-values are not described in the documents, such as "Plastic Material Dictionary" described above, can be obtained.

The following describes specific examples of the reaction aids having the vinyl group with their Q-values. Parts of the reaction aids do not have the Q-values described.

For the reaction aid having a vinyl group, specifically, a styrene compound, a vinylpyridine compound, acrylonitrile (Q-value: 0.48), a (meth)acrylate compound, a (meth)acrylamide compound, fatty acid vinyl ester, or the like can be used.

Examples of the styrene compound include styrene (Q-value: 1.00), 2-methylstyrene, 3-methylstyrene (Q-value: 1.57), 4-methylstyrene (Q-value: 1.10), α-methylstyrene (Q-value: 0.97), and the like.

Examples of the vinylpyridine compound include 4-vinylpyridine (Q-value: 2.47) and the like.

Examples of the (meth)acrylate compound include glycidyl methacrylate (Q-value: 0.96), 2-hydroxypropyl methacrylate (Q-value: 4.38), and the like.

Examples of the fatty acid vinyl ester include vinyl laurate (Q-value: 0.011) and the like.

From the aspect of enhancing the mechanical strength, the reaction aid having a vinyl group is preferably a reaction aid with a Q-value of 0.54 to 5.00.

From the aspect of enhancing the mechanical strength, the reaction aid having a vinyl group is preferably a styrene compound or a (meth) acrylic acid ester compound.

A grafting rate of the reaction aid having a vinyl group in the alkoxysilane-modified polypropylene resin is preferably 0.1 to 20 mass%, and more preferably 1 to 5 mass%. As for the grafting rate of the reaction aid having a vinyl group, the alkoxysilane-modified polypropylene resin heated to be melted in a hot xylene is dripped into acetone and reprecipitated to remove an unreacted monomer component and is measured by FT-IR, and thus, a monomer amount of the reaction aid having a vinyl group grafted to the polypropylene resin can be calculated in a mass% conversion.

In the alkoxysilane-modified polypropylene resin in which the reaction aid having a vinyl group is made coexisted in the grafting reaction, it is considered that the resin is stabilized and the grafting reaction of the silane coupling agent is optimized. While the reason is not clear, it is considered that a contributory factor is that, when the alkoxysilane-modified polypropylene resin is prepared, these reaction aids are grafted to the polypropylene resin to resonance-stabilize polymer radicals generated in the polypropylene resin to reduce a chain break of the polypropylene resin as a side reaction of the grafting reaction, and the copolymerization reaction with the (meth)acrylic silane compound enhances an introduction efficiency of the silane coupling agent.

### (Cellulose fiber)

Derivations of the cellulose fibers for use in the present invention are not specifically limited, and specific examples thereof include cellulose fibers obtained using, for example, wood, bamboo, hemp, jute, kenaf, agricultural product remains or wastes (for example, straw of wheat or rice plant, corn, stalks of cotton, and sugar cane), cloth, regenerated pulp, and waste paper as a raw material. The pulp is also a raw material for paper and consists primarily of a tracheid which is extracted from a plant. From a chemical viewpoint, a primary constituent of the pulp is a polysaccharide and its primary constituent is cellulose. As the cellulose fibers for use in the present invention, the cellulose fibers derived from wood are particularly preferred.

The above-described cellulose fibers are not specifically limited and the cellulose fibers obtained by any desired production method can be used. For example, specific examples thereof include cellulose fibers obtained by mechanical processing that performs a grinding process with a physical force, or by chemical processing, such as the kraft pulp method, the sulfide pulp method, and the alkaline pulp process, or by combined use of such processings. In the above-described chemical processing, using a chemical, such as a caustic soda, and the like, lignin, hemicellulose, and the like can be removed from a plant material, such as wood, to extract almost pure cellulose fiber. The cellulose fiber thus obtained is also referred to as a pulp fiber.

From the point of improving the mechanical property, the cellulose fibers for use in the present invention are preferably cellulose fibers prepared by chemical processing, and more preferably cellulose fibers prepared by a kraft pulp method. The cellulose fibers included in the resin composition of the present invention may be of one kind or may be of two or more kinds.

A cross section of the cellulose fibers for use in the present invention has a diameter of preferably 1 to 30 µm, more preferably 1 to 25 µm, and further preferably 5 to 20 µm. The length (fiber length) of the cellulose fibers is preferably 10 to 2200 µm, and more preferably 50 to 1000 µm. When the size of the cellulose fibers is at least within the above range, this size does not substantially affect the total area of aggregates of the cellulose fibers in the resin composition obtained through melt-mixing, described later.

The above diameter of the cellulose fibers contained in the resin composition of the present invention can be measured by a scanning electron microscope (SEM) or a fiber analyzer. The fiber length of the cellulose fibers also can be measured by the SEM observation. In the measurement of the fiber length by the SEM observation, a residue after eluting a resin component in a resin composition of the present invention by using a hot xylene is placed on a stage, and processing, such as vapor deposition, is performed, thus allowing measurement of the fiber length by the SEM observation.

The cellulose fibers used as a raw material in the present invention are preferably unmodified cellulose fibers. Here, the "unmodified cellulose fibers" refer to cellulose fibers that have not been modified with a silane coupling agent, TEMPO (2,2,6,6-tetramethylpiperidine 1-oxyl), acetic acid, alkenyl succinic anhydride, or the like. However, modified cellulose fibers obtained such that unreacted cellulose fibers react and become modified in the melt-mixing step are included in the resin composition of the present invention.

### (Contents of respective components)

In the resin composition of the present invention, the content of the cellulose fibers is 101 to 400 mass parts, preferably 101 to 300 mass parts, more preferably 101 to 240 mass parts, further preferably 103 to 240 mass parts, particularly preferably 110 to 235 mass parts, and most preferably 120 to 235 mass parts, based on 100 mass parts of the thermoplastic resin. Although it depends on the content of other components, when the content of the cellulose fibers is increased, the mechanical strength tends to become higher. On the other hand, when the content of the cellulose fibers is increased, aggregates tend to be easily formed. From the viewpoint of further reducing the total area of aggregates of the cellulose fibers, the content of the cellulose fibers is also preferably 103 to 160 mass parts, preferably 103 to 130 mass parts, or preferably 103 to 120 mass parts, based on 100 mass parts of the thermoplastic resin.

The content of the cellulose fibers in the resin composition of the present invention can be 50.2 to 80.0 mass% (mass% corresponding to 101 to 400 mass parts mentioned above) in the resin composition.

A content of the thermoplastic resin in the resin composition of the present invention is preferably 20.0 to 49.8 mass%, and more preferably 29.0 to 49 mass%.

A content of the polyolefin resin A in the resin composition of the present invention is preferably 20 to 49 mass%, more preferably 25 to 48 mass%, more preferably 29 to 40 mass%, and further preferably 29 to 36 mass%.

A content of the alkoxysilane-modified polypropylene resin in the resin composition is preferably 0.1 to 25 mass%, more preferably 0.1 to 20 mass%, further preferably 0.5 to 20 mass%, further preferably 2.0 to 20 mass%, further preferably 4.5 to 20 mass%, and further preferably 12 to 20 mass%. Note that the content of the alkoxysilane-modified polypropylene resin in the resin composition is a total amount of the alkoxysilane-modified polypropylene resin in a form that forms a dehydration condensation product with the cellulose fibers and the alkoxysilane-modified polypropylene resin that does not form a dehydration condensation product with the cellulose fibers. While it depends on contents of other components, increasing the content of the alkoxysilane-modified polypropylene resin tends to increase the mechanical strength.

A value of a ratio (mass ratio) of the content of the cellulose fibers to the content of the alkoxysilane-modified polypropylene resin is preferably [the content of the cellulose fibers]/[the content of the alkoxysilane-modified polypropylene resin] = 2 to 55, more preferably [the content of the cellulose fibers]/[the content of the alkoxysilane-modified polypropylene resin] = 2 to 30, and further preferably [the content of the cellulose fibers]/[the content of the alkoxysilane-modified polypropylene resin] = 2 to 15.

A preferred relationship between the content of the cellulose fibers and the total area of aggregates of the cellulose fibers is shown below. When the content of the cellulose fibers based on 100 mass parts of the thermoplastic resin is 101 mass parts or more and less than 110 mass parts, 110 mass parts or more and less than 130 mass parts, or 130 mass parts or more and less than 150 mass parts, the total area of aggregates of the cellulose fibers is preferably 0.15 to 0.80 mm²/cm², more preferably 0.20 to 0.80 mm²/cm², further preferably 0.25 to 0.80 mm²/cm², further preferably 0.30 to 0.80 mm²/cm², and further preferably 0.30 to 0.75 mm²/cm². In this case, the above [the content of the cellulose fibers]/[the content of the alkoxysilane-modified polypropylene resin] can be 5 to 55, 7 to 50, 8 to 40, 8 to 30, or 8 to 20. That is, in a preferred embodiment of the present invention, when a large amount of cellulose fibers are contained, even if the amount of an alkoxysilane-modified polypropylene resin used relative to the cellulose fibers is reduced to some extent, the total area of aggregates of the cellulose fibers is suppressed to the desired level.

In addition, when the content of the cellulose fibers based on 100 mass parts of the thermoplastic resin is 150 mass parts or more and less than 200 mass parts, or 200 mass parts or more and less than 280 mass parts (preferably less than 250 mass parts), the total area of aggregates of the cellulose fibers is preferably 0.20 to 1.00 mm²/cm², more preferably 0.30 to 1.00 mm²/cm², further preferably 0.40 to 0.98 mm²/cm², further preferably 0.50 to 0.98 mm²/cm², further preferably 0.60 to 0.98 mm²/cm², and further preferably 0.60 to 0.95 mm²/cm².

In this case, the above [the content of the cellulose fibers]/[the content of the alkoxysilane-modified polypropylene resin] can be 6 to 20, 7 to 18, 8 to 17, or 9 to 16. In such a case, in a preferred embodiment of the present invention, when a too large amount of cellulose fibers are contained, even if the amount of an alkoxysilane-modified polypropylene resin used relative to the cellulose fibers is reduced to some extent, the total area of aggregates of the cellulose fibers is suppressed to the desired level.

In the resin composition of the present invention, the above preferred relationship between the content of the cellulose fibers and the total area of aggregates of the cellulose fibers can be realized by appropriately controlling the amount of water by melt-mixing in the presence of water, described later.

### (Other components)

The resin composition of the present invention may have an embodiment formed of the polyolefin resin A, the alkoxysilane-modified polypropylene resin, and the cellulose fiber as described above, and also may contain the following components and the like within a range that does not impair the advantageous effects of invention.

For example, an elastomer, such as an ethylene-α-olefin copolymer, may be additionally compounded to modify a physical property of the resin composition.

The resin composition of the present invention can appropriately contain an antioxidant, a light stabilizer, a radical scavenger, an ultraviolet absorber, a colorant (dye, organic pigment, inorganic pigment), a filler, a slipping agent, a plasticizer, a processing aid such as an acrylic processing aid, a foaming agent, a lubricant such as paraffin wax, a surface treatment agent, a nucleating agent, a releasing agent, a hydrolysis inhibitor, an anti-blocking agent, an antistatic agent, an anticlouding agent, a fungicidal agent, an ion trapping agent, a flame retardant, and a flame retardant aid within a range that does not impair the above-described objects.

For example, the resin composition of the present invention may contain or need not contain a hydrophilic compound, such as water.

### (Confirmation and determination method for presence/absence of cellulose fiber content)

The presence/absence of the content of the cellulose fiber in the resin composition of the present invention can be confirmed as follows.

It has been known that cellulose of a cellulose fiber adopts various crystalline structures, such as a type I and a type II. Natural cellulose has a crystalline structure of a type I_{α} (triclinic crystal) and a type I_{β} (monoclinic crystal), and plant-derived cellulose generally contains a lot of type I_{β} crystals.

The resin composition of the present invention has the diffraction peak at the position of the scattering vector s of 3.86 ± 0.1 nm⁻¹ in the wide-angle X-ray diffraction measurement. This diffraction peak is derived from a (004) plane of the I_{β} type crystal of the cellulose. That is, in the resin composition of the present invention, at least a part of the cellulose of the cellulose fiber has the crystalline structures, and at least a part of them is the I_{β} type crystal. The crystalline structures other than the I_{β} type crystal in the crystalline structures of the cellulose are not specifically limited. Hereinafter, the cellulose fiber is referred to as a "component having the diffraction peak at the position of the scattering vector s of 3.86 ± 0.1 nm⁻¹" in some cases.

Containing the cellulose fiber can be confirmed by various methods. For example, it can be confirmed by observing the diffraction peak derived from cellulose crystal in the cellulose fiber using the X-ray. While it is necessary to be careful because the diffraction peak position differs depending on the wavelength of the X-ray used, the diffraction peak derived from the (004) plane of the I_{β} type crystal of the cellulose can be observed in the proximity of the scattering vector s of 3.86 nm⁻¹ (2θ = 34.6°) when the CuKα ray (λ = 0.15418 nm) is used. For capturing the diffraction of the (004) plane, the X-ray needs to be incident on a sample that is rotated by a degree of θ. That is, when the CuKα ray is used, a sample stage is to be rotated by θ = 17.3°. For the diffraction peak derived from the cellulose crystal, while other diffraction peaks can be observed inside the (004) plane, since their diffraction positions overlap with that of a diffraction peak derived from polypropylene, it is not allowed to determine them as definite diffraction peaks in some cases. In view of this, in this description, the presence/absence of the cellulose fiber is determined using the diffraction peak of the I_{β} type crystal (004) plane of the cellulose.

The resin composition of the present invention can be preferably used as a material for a cellulose fiber reinforced resin formed body, described later. The resin composition of the present invention can also be mixed, as a masterbatch with a high content of cellulose fibers, with other resins for use in the production of the cellulose fiber reinforced resin formed body.

### [Cellulose fiber reinforced resin formed body]

The cellulose fiber reinforced resin formed body of the present invention (hereinafter also referred to as the resin formed body of the present invention) is a formed body using the above resin composition. That is, the resin formed body of the present invention is a formed body using a cellulose fiber reinforced resin composition containing 101 to 204 mass parts of cellulose fibers based on 100 mass parts of a thermoplastic resin including a polyolefin resin and an alkoxysilane-modified polypropylene resin, wherein in planar view observation, the total area of aggregates of the cellulose fibers is 1.00 mm²/cm² or less.

The resin formed body of the present invention is the same as the composition described above, except that the resin formed body is molded into a desired shape. The explanation of the resin composition of the present invention can also apply to the resin formed body of the present invention. That is, the state of aggregates of the cellulose fibers in the resin formed body of the present invention is the same as the state of aggregates of the cellulose fibers in the resin composition of the present invention. In the resin composition constituting the resin formed body of the present invention, the total area of aggregates of the cellulose fibers is 1.00 mm²/cm² or less in planar view observation.

### [Method of producing cellulose fiber reinforced resin composition and cellulose fiber reinforced resin formed body]

The resin composition of the present invention can be obtained, for example, by melt-mixing at least a specific amount of a thermoplastic resin including a polyolefin resin A and an alkoxysilane-modified polypropylene resin, and a specific amount of cellulose fibers in the presence of water.

In addition, the resin formed body of the present invention can be obtained by molding the obtained molten mixture (the cellulose fiber reinforced resin composition).

That is, the method of producing the resin composition of the present invention contains a step of melt-mixing a specific amount of a thermoplastic resin including a polyolefin resin A and an alkoxysilane-modified polypropylene resin, and a specific amount of cellulose fibers in the presence of water. The method of producing the resin formed body of the present invention also contains a step of melt-mixing a specific amount of a thermoplastic resin including a polyolefin resin A and an alkoxysilane-modified polypropylene resin, and a specific amount of cellulose fibers in the presence of water, followed by molding. Melt-mixing in the presence of water causes the alkoxysilyl group in the alkoxysilane-modified polypropylene resin to develop a dealcoholization condensation reaction with the hydroxyl group of the cellulose fiber, and/or causes the silanol group generated by hydrolysis of the alkoxysilyl group in the alkoxysilane-modified polypropylene resin, the hydroxyl group of the cellulose fiber, and the like to have a dehydration condensation. The condensation reaction of them enhances the adherence (integrity) between the alkoxysilane-modified polypropylene resin and the cellulose fiber, and thus, the dispersibility of the cellulose fiber in the polyolefin resin A and the strengthening effect of the cellulose fiber can be effectively enhanced. In the production of the polyolefin resin composition, the order of melt-mixing the thermoplastic resin, cellulose, and water is not specifically limited. After the thermoplastic resin and cellulose are melt-mixed in advance, water may be added and further melt-mixed, or after the thermoplastic resin, cellulose, and water are all put in a processing machine, melt-mixing may be performed. Alternatively, after cellulose and water are mixed, the thermoplastic resin may be added and further melt-kneaded. Melt-mixing of these components is preferably performed in a processing machine at the stage of processing and molding by extrusion, injection, or the like.

Water is preferred because separation, recovery, and environmental load are low, and residual water has little adverse effect on cellulose.

In order to efficiently enhance the strengthening effect of the above-described cellulose fiber, a catalyst that accelerates the above-described condensation may be used.

Respective combined amounts of the polyolefin resin A, the alkoxysilane-modified polypropylene resin, and the cellulose fibers in the melt-mixing are combined amounts to be the contents in the resin composition or formed body as described above.

The additive amount of water used during melt-mixing is not specifically limited, but is generally 5 mass parts or more and less than 150 mass parts based on 100 mass parts (dry mass) of the cellulose fibers. Setting the additive amount of water within this range makes it easier to produce a resin composition in which the formation of aggregates of cellulose fibers in the resin is reduced. The amount of water used during melt-mixing is more preferably 5 to 120 mass parts, further preferably 5 to 100 mass parts, further preferably 5 to 80 mass parts, particularly preferably 10 to 25 mass parts, and most preferably 13 to 23 mass parts, based on 100 mass parts of the cellulose fibers.

While the temperature in the step of the melt-mixing is not specifically limited insofar as the melt-mixing temperature is a temperature of the melting point of the resin or more, and, for example, the melt-mixing temperature can be set to 160°C to 230°C, and more preferably 170°C to 210°C.

From the aspect of reducing pyrolysis of the cellulose fiber, the melt-mixing temperature is preferably 250°C or less, more preferably 230°C or less, and further preferably 200°C or less.

In performing the melt-mixing step at high temperature, the melt-mixing may be performed by adding an additive such as an antioxidant, for example, for the purpose of suppressing a thermal degradation or an oxidative degradation.

The melt-mixing time is not specifically limited, and can be appropriately set.

A device used in the above-described melt-mixing is not specifically limited as long as it can perform the melt-mixing at the melting point of the resin component or higher temperature, and examples of the device includes, for example, a blender, a kneader, a mixing roll, a banbury mixer, a single-screw or twin-screw extruder, and the like, and the twin-screw extruder is preferred.

Water can be added into a mixer (e.g., an extruder) and can be collected by a vent.

From the aspect of handleability in a subsequent molding step, the obtained melt-mixed product is preferably processed into a pellet form (hereinafter, the obtained pellet is also simply referred to as a "pellet"). The conditions for pellet processing are not specifically limited, and it can be processed according to a usual method. For example, a method in which, after water cooling the melt-mixed product, the melt-mixed product is processed into a pellet form using a strand cutter or the like is included as an example.

Note that, before the melt-mixing, each of the components may be dryblended (mixed in advance). The dry-blending is not specifically limited, and can be performed according to a usual method.

In order to improve a dispersion state of the cellulose in the base resin when the above-described melt-mixing is performed, before the melt-mixing, the alkoxysilane-modified polypropylene resin and the cellulose fibers may be premixed at a temperature less than a melting point of the alkoxysilane-modified polypropylene resin.

The method for molding the above-described molten mixture is not specifically limited as long as it is a method that can mold the above-described molten mixture into a desired shape. For example, there are a method for melt compression molding the molten mixture, a method for injection molding the molten mixture, and the like. The molten mixture may be molded into a desired shape after it is processed into a pellet form. In the present invention, it is preferred that, after the molten mixture is processed into a pellet form, it is injection molded, thereby obtaining the formed body.

The molding can be performed simultaneously or continuously with the melt-mixing. That is, examples include an aspect in which the respective components are melt-mixed during the melt molding, for example, during the injection molding, or immediately before it. For example, a sequence of steps of melt-mixing these components in a molding apparatus, subsequently, injecting it to mold into a desired shape can be employed.

In the above-described injection molding, an injection temperature is not specifically limited as long as it is a temperature equal to or more than a melting point of the polyolefin resin, and, for example, when the polypropylene resin is used, it can be 160°C to 230°C, and preferably 170°C to 210°C.

From an aspect of reducing the pyrolysis of the cellulose fiber, the above-described injection temperature is preferably 250°C or less, more preferably 230°C or less, and further preferably 200°C or less.

The condition, such as an injection speed, a mold temperature, pressure keeping, and period for the pressure keeping in the above-described injection molding can be appropriately adjusted depending on the purpose.

In the above-described melt compression molding, a melt compression temperature is not specifically limited as long as it is a temperature equal to or more than a melting point of the polyolefin resin, and for example, when the polypropylene resin is used, it can be 160°C to 230°C, and preferably 170°C to 210°C.

From an aspect of reducing the pyrolysis of the cellulose fiber, the above-described melt compression temperature is preferably 250°C or less, more preferably 230°C or less, and further preferably 200°C or less.

The condition such as a preheating time, a pressurization time, and a pressure in the melt compression molding can be appropriately adjusted, depending on the purpose.

The apparatus used in the melt compression molding is not specifically limited, and for example, a pressing machine is included. In addition, for example, a sheeting apparatus using an extruder for sheet molding may be used.

While the shape of the sheet is not specifically limited, for example, the sheet can be processed in a dumbbell shape. The width, the length, the thickness, and the like can be appropriately adjusted such that the stretching is easily performed. For example, the thickness of the sheet is preferably 2 mm or less, and more preferably 1 mm or less.

The preparation of the alkoxysilane-modified polypropylene resin can be performed by causing the silane coupling agent to develop a grafting reaction to the polypropylene resin in a presence of the radicals generated by the decomposition of the organic peroxide. That is, it can be prepared by melt-mixing the polypropylene resin and the silane coupling agent in the presence of the organic peroxide at a temperature equal to or more than a decomposition temperature of the organic peroxide.

The raw materials (the polyolefin resin, the silane coupling agent, and the organic peroxide) used in this preparation are as described above.

The temperature at which the above-described respective components are melt-mixed is equal to or more than the decomposition temperature of the organic peroxide, and preferably a temperature of [decomposition temperature of organic peroxide + 25°C] to [decomposition temperature of organic peroxide + 110°C]. Within the above-described mixing temperature, the above-described components are melted and the organic peroxide is decomposed to generate the radicals, and thus, the necessary grafting reaction sufficiently progresses. While it depends on the used raw materials, the melt-mixing temperature can be 160°C to 300°C, can also be 170°C to 250°C, and can also be 180°C to 210°C. Other conditions, for example, a mixing period can be appropriately set considering the efficiency and the purpose.

For the mixing device used for the mixing, for example, a single-screw extruder, a twin-screw extruder, a roll, a banbury mixer, or various kinds of kneaders is used.

In the preparation of the alkoxysilane-modified polypropylene resin, a mixing amount of the silane coupling agent to 100 mass parts of the polypropylene resin as the raw material is preferably 0.1 to 20 mass parts, more preferably 1 to 10 mass parts, more preferably 2 to 8 mass parts, and further preferably 2 to 6 mass parts.

In the preparation of the alkoxysilane-modified polypropylene resin, an additive amount of the organic peroxide to 100 mass parts of the polypropylene resin as the raw material is preferably 0.001 to 10 mass parts, more preferably 0.01 to 5 mass parts, further preferably 0.05 to 5 mass parts, further preferably 0.05 to 3 mass parts, and also preferably 0.1 to 2 mass parts.

The preparation of the alkoxysilane-modified polypropylene resin can also be performed in a presence of the reaction aid having a vinyl group when a (meth)acrylic silane compound is used as the silane coupling agent. The preparation in the presence of the reaction aid having a vinyl group ensures improving a reaction efficiency of the (meth)acrylic silane compound. Specifically, when the polypropylene resin and the (meth)acrylic silane compound are melt-mixed in the presence of the organic peroxide at a temperature equal to or more than the decomposition temperature of the organic peroxide, the reaction aid having a vinyl group is mixed. In the preparation of the alkoxysilane-modified polypropylene resin, an additive amount of the reaction aid having a vinyl group to 100 mass parts of the polypropylene resin as the raw material is preferably 0.1 to 20 mass parts, more preferably 0.5 to 10 mass parts, further preferably 1 to 7 mass parts, and particularly preferably 1.5 to 5 mass parts.

The preparation of the alkoxysilane-modified polypropylene resin can also be performed simultaneously with the melt-mixing with the polyolefin resin A and the cellulose fibers described above. That is, the polypropylene resin as the polyolefin resin A is used, and while a part of it is alkoxysilane-modified and the dealcoholization/dehydration condensation reaction with the cellulose fibers is also developed, and thus, the resin composition of the present invention can be obtained by melt-mixing.

In the method of producing the resin composition of the present invention, subsequent to the preparation of the alkoxysilane-modified polypropylene resin, the melt-mixing with the polyolefin resin A and the cellulose fibers described above can also be performed.

A preferred form of the method of producing the resin composition of the present invention is as follows.

A method of producing a cellulose fiber reinforced resin composition containing 101 to 400 mass parts of cellulose fibers based on 100 mass parts of a thermoplastic resin including a polyolefin resin and an alkoxysilane-modified polypropylene resin, wherein in planar view observation, a total area of aggregates of the cellulose fibers is 1.00 mm²/cm² or less, the method containing the following steps (a) and (b).
(a) A step of mixing a polypropylene resin and a silane coupling agent in a presence of an organic peroxide at a decomposition temperature or more of the organic peroxide to cause the silane coupling agent to develop a grafting reaction to the polyolefin resin, thereby preparing an alkoxysilane-modified polypropylene resin.
(b) A step of melt-mixing the alkoxysilane-modified polypropylene resin, a polyolefin resin and cellulose fibers in the presence of water.

The preparation of the alkoxysilane-modified polypropylene resin described above is more preferred to be performed in a presence of a reaction aid having a vinyl group as described above when a (meth)acrylic silane compound is used as the silane coupling agent (a second aspect), and further preferred to be performed in a presence of a styrene compound.

### [Applications]

The resin formed body of the present invention can be used as a product, a component, and/or a member below, which require the mechanical strength and the excellent appearance. For example, transport equipment (automobile, motorcycle, train, aircraft, and the like), a structural member of a robot arm, a component of an amusement robot, a member of an artificial limb, a material of a home appliance, a housing of OA equipment, information processing equipment, a mobile terminal, a building material, a film for plastic greenhouse, drainage equipment, a material of a toiletry product, various kinds of tanks, a container, a sheet, a packing material, a toy, a writing material, a food product container, a bobbin, a tube, a furniture material (for example, a wall material and a handrail), a shoe, palette, a furniture, basket, and sport goods, are included.

The material for the transport equipment includes a vehicle material. The vehicle material includes, for example, interior components, such as trims, such as a dashboard trim, a door trim, and a pillar trim, a meter panel, a meter housing, a glove compartment, a package tray, a roof head lining, a console, an instrumental panel, an arm rest, a seat, a seat back, a trunk lid, a trunk lid lower, a door inner panel, a pillar, a spare tire cover, a door knob, a light housing, and a back tray; exterior components, such as a bumper, a hood, a spoiler, a radiator grille, a fender, a fender liner, a rocker panel, a side step, a door outer panel, a side door, a back door, a roof, a roof carrier, a wheel cap cover, a side-view mirror cover, and an undercover; other components, such as a battery case, an engine cover, a fuel tank, a fuel tube, an oil filler box, an air intake duct, an air cleaner housing, an air conditioner housing, a coolant reservoir tank, a radiator reservoir tank, an window washer tank, an intake manifold, a rotating member, such as a fan and a pulley; a component, such as a wire harness protector; a connection box or a connector, and an integrally molded component, such as a front end module and a front end panel.

### EXAMPLES

The present invention will be described in more detail based on the following Examples and Comparative Examples, but the present invention is not limited thereto.

In the examples and comparative examples below, "parts" means "mass parts" unless otherwise stated.

### -Used Materials-

The following describes the used materials.
(1) Polypropylene resin (A1)
   J106MG, manufactured by Prime Polymer Co., Ltd., propylene homopolymer, MFR (230°C/2.16kg) = 15 g/10min
(2) Polypropylene resin (A2)
   J108M, manufactured by Prime Polymer Co., Ltd., propylene homopolymer, MFR (230°C/2.16kg) = 45 g/10min
(3) Cellulose fiber
   ARBOCEL B400 (trade name), manufactured by J. Rettenmaier & Söhne GmbH + Co KG
(4) Water
   Distilled water
(5) Monomer for resin modification
   3-(Trimethoxysilyl)propyl methacrylate (SiMA), manufactured by Tokyo Chemical Industry Co., Ltd.
   Glycidyl methacrylate (GMA), manufactured by Tokyo Chemical Industry Co., Ltd.
(6) Reaction aid having vinyl group
   Styrene, manufactured by JUNSEI CHEMICAL CO., LTD.
(7) Organic peroxide
   Dicumyl peroxide: PERCUMYL D (trade name), manufactured by NOF CORPORATION, one minute half-life temperature: 175.2°C
(8) Alkoxysilane-modified polyethylene (PE) resin
   Linklon (trade name), manufactured by Mitsubishi Chemical Corporation

The following describes resin compositions of Examples 1 to 10, which were produced by using a polypropylene resin and an alkoxysilane-modified polypropylene resin as a thermoplastic resin and adding water during melt-mixing, a resin composition of Comparative Example 1, which was produced without adding water during melt-mixing, resin compositions of Comparative Examples 2 to 4, which were produced without using an alkoxysilane-modified polypropylene resin, Comparative Examples 5 and 6, which were produced by using modified resins other than the alkoxysilane-modified polypropylene resin, and Reference Example 1, which was produced by using only a polyolefin resin.

### (Example 1)

### -Preparation of alkoxysilane-modified polypropylene resin-

An alkoxysilane-modified polypropylene resin (modified resin) was prepared as follows using a polypropylene resin (A1), 3-(trimethoxysilyl)propyl methacrylate as a silane coupling agent, and styrene as a reaction aid.

The polypropylene resin (A1) was put to a co-rotation twin screw extruder (product name: KZW15TW-45MG-NH, manufactured by TECHNOVEL CORPORATION) with a screw diameter of 15 mm and LID = 45, a mixed solution of the 3-(trimethoxysilyl)propyl methacrylate (SiMA), styrene, and dicumyl peroxide was dripped with a syringe and mixed so as to have a constant proportion from a vent part for liquid addition provided in the middle of a barrel, and was extruded into a strand form with a strand die being set at 190°C. The above-described mixing was performed by adjusting 5 mass parts of the 3-(trimethoxysilyl)propyl methacrylate (SiMA), 3.75 mass parts of the styrene, and 0.2 mass part of the dicumyl peroxide to be mixed to 100 mass parts of the polypropylene resin. A polypropylene resin modified with the 3-(trimethoxysilyl)propyl methacrylate (SiMA-PP) in a pellet form was obtained through cooling and cutting.

### -Melt-mixing and molding-

The polypropylene resin (PP) (A2), SiMA-PP, cellulose fibers, and water were each put in a twin-screw extruder [manufactured by The Japan Steel Works, Ltd.] with a screw diameter of 25 mm and LID = 70 by a feeder or liquid addition pump controlled by the supply mass per hour, and melt-mixed. The raw materials were each supplied after their amounts were adjusted to 104 mass parts of the cellulose fibers and 20 mass parts of water based on 100 mass parts of the thermoplastic resin containing 90 mass parts of the polypropylene resin (A2) and 10 mass parts of SiMA-PP. After sufficiently homogeneous melt-mixing was performed while the barrel temperature of the twin-screw extruder was set to 180°C and the screw rotation speed was set to 250 rpm, thereby obtaining a resin composition (cellulose fiber reinforced resin composition). Then, the resin composition was cooled with water and processed into a pellet using a strand cutter.

The obtained pellet was dried at 80°C for 24 hours, and was subsequently provided to an injection molding machine (manufactured by FANUC CORPORATION, product name: ROBOSHOT α-S30iA), thereby obtaining a JIS-5 type dumbbell test specimen (resin formed body) and a JIS K7139:2009-B1 type bar test specimen (resin formed body).

### (Example 2)

A resin composition and two resin formed bodies were obtained in a similar way to Example 1 except that the blending amount of the water was changed from 20 mass parts to 5 mass parts.

### (Example 3)

A resin composition and two resin formed bodies were obtained in a similar way to Example 1 except that the blending amount of the water was changed from 20 mass parts to 100 mass parts.

### (Example 4)

A resin composition and two resin formed bodies were obtained in a similar way to Example 1 except that the blending amount of the polypropylene resin (A2) was changed from 90 mass parts to 87 mass parts, the blending amount of SiMA-PP was changed from 10 mass parts to 13 mass parts, and the blending amount of the cellulose fibers was changed from 104 mass parts to 150 mass parts.

### (Example 5)

A resin composition and two resin formed bodies were obtained in a similar way to Example 1 except that the blending amount of the polypropylene resin (A2) was changed from 90 mass parts to 83 mass parts, the blending amount of SiMA-PP was changed from 10 mass parts to 17 mass parts, and the blending amount of the cellulose fibers was changed from 104 mass parts to 240 mass parts.

### (Example 6)

A resin composition and two resin formed bodies were obtained in a similar way to Example 1 except that the blending amount of the polypropylene resin (A2) was changed from 90 mass parts to 98 mass parts, and the blending amount of SiMA-PP was changed from 10 mass parts to 2 mass parts.

### (Example 7)

A resin composition and two resin formed bodies were obtained in a similar way to Example 1 except that the blending amount of the polypropylene resin (A2) was changed from 90 mass parts to 95 mass parts, and the blending amount of SiMA-PP was changed from 10 mass parts to 5 mass parts.

### (Example 8)

A resin composition and two resin formed bodies were obtained in a similar way to Example 1 except that the blending amount of the polypropylene resin (A2) was changed from 90 mass parts to 80 mass parts, and the blending amount of SiMA-PP was changed from 10 mass parts to 20 mass parts.

### (Example 9)

A resin composition and two resin formed bodies were obtained in a similar way to Example 1 except that the blending amount of the polypropylene resin (A2) was changed from 90 mass parts to 70 mass parts, and the blending amount of SiMA-PP was changed from 10 mass parts to 30 mass parts.

### (Example 10)

A resin composition and two resin formed bodies were obtained in a similar way to Example 1 except that the blending amount of the polypropylene resin (A2) was changed from 90 mass parts to 60 mass parts, and the blending amount of SiMA-PP was changed from 10 mass parts to 40 mass parts.

### (Comparative Example 1)

A resin composition and two resin formed bodies were obtained in a similar way to Example 1 except that water was not used during melt-mixing.

### (Comparative Example 2)

A resin composition and two resin formed bodies were obtained in a similar way to Example 1 except that SiMA-PP was not blended and water was not used during melt-mixing.

### (Comparative Example 3)

A resin composition and two resin formed bodies were obtained in a similar way to Example 1 except that SiMA-PP was not blended.

### (Comparative Example 4)

An aqueous dispersion with 51 mass% of the cellulose fibers and 2.5 mass% of SiMA was produced and was subject to a stirring process for two hours at room temperature. The aqueous dispersion after the process was filtered, and the cellulose fibers that remained as a residue was filtered twice with water to wash away an unreacted silane coupling agent. The cellulose fibers recovered after the washing was dried for all night at 120°C in an oven. Thus, the cellulose fibers whose surface was processed with the silane coupling agent was obtained.

A resin composition and two resin formed bodies were obtained in a similar way to Example 1 except that the modified resin (SiMA-PP) was not added in "Melt-mixing and molding," and 104 mass parts of the cellulose fibers was changed to 104 mass parts of the cellulose fibers whose surface was processed with the silane coupling agent described above in Example 1.

### (Comparative Example 5)

A glycidyl methacrylate-modified polyolefin resin (GMA-PP) was obtained in a similar way to Example 1 except that the silane coupling agent was changed to glycidyl methacrylate (GMA) in the "Preparation of alkoxysilane-modified polypropylene resin" of Example 1.

A resin composition and two resin formed bodies were obtained in a similar way to Example 1 except that 10 mass parts of SiMA-PP was changed to 10 mass parts of GMA-PP in Example 1.

### (Comparative Example 6)

A resin composition and two resin formed bodies were obtained in a similar way to Example 1 except that 10 mass parts of SiMA-PP was changed to 10 mass parts of the alkoxysilane-modified polyethylene (PE) resin in Example 1.

### (Reference example 1)

A resin composition and two resin formed bodies were obtained in a similar way to Example 1 except that the cellulose fibers and SiMA-PP were not blended, and water was not used. The resin composition and resin formed bodies of Reference Example 1 are each a polyolefin resin alone (polyolefin resin) constituting each of the resin compositions of Examples 1 to 10 and Comparative Examples 1 to 6.

The obtained resin compositions and resin formed bodies were subject to the following tests, and the results are shown in Table 1.

### [Tensile strength test]

Tensile strengths were evaluated as indicators of mechanical strengths.

The dumbbell test specimens obtained above were subject to tensile tests using an autograph precision universal testing machine (manufactured by Shimadzu Corporation) based on Japanese Industrial Standard K7161 (2014), and tensile strengths (MPa) were measured. The test condition was a room temperature (25°C), a chuck distance of 60 mm, and a tension speed of 50 mm/minute. A tensile strength higher than the tensile strength of Reference Example 1 is regarded as passed.

### [Flexural strength test]

Flexural strengths were evaluated as another indicators of mechanical strengths.

The bar test specimens obtained above were subject to bending tests using an autograph precision universal testing machine (manufactured by Shimadzu Corporation) based on Japanese Industrial Standard K7171 (2022), and flexural strength (MPa) were measured. The test conditions were room temperature (25°C), a support distance of 64 mm, and a load speed of 2 mm/min. A flexural strength higher than the tensile strength of Reference Example 1 is regarded as passed.

### [Appearance evaluation]

The appearance of the formed bodies using the resin compositions was evaluated based on the total area of aggregates of the cellulose fibers.

Using the pellets of the resin composition thus obtained, a sheet of measurement having a thickness of 0.1 mm was produced. Specifically, about 2 g of pellets of the resin composition were prepared, placed in a 100 mm x 100 mm x 0.1 mm press mold, preheated at 190°C for 5 minutes using a press apparatus, and then further compressed at 190°C under a pressure of 20 MPa for 5 minutes to prepare a sheet of measurement. The produced sheet (100 mm x 100 mm x 0.1 mm) was placed together with a ruler on a light board with an illuminance of 2700 Lx and subjected to planar view observation with a digital camera, and the observed surface was photographed. For the 60 mm x 60 mm area of the obtained image, the histogram of luminance was obtained by using "NIS Elemenets D (trade name)", manufactured by Nikon Corporation, under the following image processing conditions. The intersection of a straight line overlapping the flat part of the histogram (baseline) and the tangent line with the greatest slope from the flat part of the histogram to the peak top of the histogram, which rises from the flat part to the high luminance side of the histogram, was binarized as the threshold of luminance. FIG. 1 is an explanatory diagram showing an example of the "luminance threshold". The area of each part counted as dark parts (cellulose aggregates) was measured, and the total area was calculated. In addition, the circular equivalent diameter (diameter of a perfect circle of the same area) of each cellulose aggregate (each dark part) was calculated from each area measured above, and the arithmetic mean (average circular equivalent diameter) of the obtained circular equivalent diameters was calculated. When the total area of aggregates of the cellulose fibers obtained above was divided by 60 mm × 60 mm = 36 cm² to give a total area per cm² of 1.00 mm²/cm² or less, this case was regarded as passed. Within this range, cellulose fiber aggregates are less likely to be recognized, resulting in an excellent appearance when made into products.

### - Image processing conditions -

### · Smooth off

A function of acting on the shape of edges of an object, and thereby smoothing the shape.

### · Clean off

A function of hiding small objects. Since only small objects disappear, other images are not affected.

### · Bury closed region off

A function of burying closed regions within an object.

### · Partition off

A function of detecting a combined single object, and separating the same.

**Table 1**

| | | Example | | | | | | | | | |
|---|---|---|---|---|---|---|---|---|---|---|---|
| Items | | 1 | 2 | 3 | 4 | 5 | 6 | 7 | 8 | 9 | 10 |
| Thermoplastic resin | PP (A2) [mass part] | 90 | 90 | 90 | 87 | 83 | 98 | 95 | 80 | 70 | 60 |
| | SiMA-PP [mass part] | 10 | 10 | 10 | 13 | 17 | 2 | 5 | 20 | 30 | 40 |
| | GMA-PP [mass part] | 0 | 0 | 0 | 0 | 0 | 0 | 0 | 0 | 0 | 0 |
| | Silane-modified PE [mass part] | 0 | 0 | 0 | 0 | 0 | 0 | 0 | 0 | 0 | 0 |
| | Total [mass part] | 100 | 100 | 100 | 100 | 100 | 100 | 100 | 100 | 100 | 100 |
| Cellulose fiber [mass part] | | 104 | 104 | 104 | 150 | 240 | 104 | 104 | 104 | 104 | 104 |
| Water [mass part | | 20 | 5 | 100 | 20 | 20 | 20 | 20 | 20 | 20 | 20 |
| PP (A2) content in resin composition [mass%] | | 44.1 | 44.1 | 44.1 | 34.8 | 24.4 | 48.0 | 46.6 | 39.2 | 34.3 | 29.4 |
| SiMA-PP content in resin composition [mass%] | | 4.9 | 4.9 | 4.9 | 5.2 | 5.0 | 1.0 | 2.5 | 9.8 | 14.7 | 19.6 |
| Tensile strength [MPa] | | 44 | 43 | 45 | 48 | 52 | 41 | 42 | 47 | 49 | 51 |
| Flexural strength [Mpa] | | 74 | 68 | 75 | 77 | 82 | 64 | 65 | 76 | 78 | 80 |
| Total area of aggregates of cellulose fibers [mm²/cm²] | | 0.51 | 0.78 | 0.33 | 0.77 | 0.91 | 0.61 | 0.57 | 0.49 | 0.45 | 0.38 |
| Average circular equivalent diameter of aggregates of cellulose fibers [mm] | | 0.21 | 0.23 | 0.21 | 0.22 | 0.25 | 0.21 | 0.21 | 0.20 | 0.21 | 0.20 |

**Table 1 (continued-1)**

| | | Comparative Example | | |
|---|---|---|---|---|
| Items | | 1 | 2 | 3 |
| Thermoplastic resin | PP (A2) [mass part] | 90 | 100 | 100 |
| | SiMA-PP [mass part] | 10 | 0 | 0 |
| | GMA-PP [mass part] | 0 | 0 | 0 |
| | Silane-modified PE [mass part] | 0 | 0 | 0 |
| | Total [mass part] | 100 | 100 | 100 |
| Cellulose fiber [mass part] | | 104 | 104 | 104 |
| Water [mass part] | | 0 | 0 | 20 |
| PP (A2) content in resin composition [mass%] | | 44.1 | 49.0 | 49.0 |
| SiMA-PP content in resin composition [mass%] | | 4.9 | 0.0 | 0.0 |
| Tensile strength [MPa] | | 42 | 25 | 27 |
| Flexural strength [Mpa] | | 65 | 39 | 42 |
| Total area of aggregates of cellulose fibers [mm²/cm²] | | 1.07 | 2.45 | 0.82 |
| Average circular equivalent diameter of aggregates of cellulose fibers [mm] | | 0.28 | 0.31 | 0.22 |

**Table 1 (continued-2)**

| | | Comparative Example | | | Reference example |
|---|---|---|---|---|---|
| Items | | 4 | 5 | 6 | 1 |
| Thermoplastic resin | PP (A2) [mass part] | 100 | 90 | 90 | 100 |
| | SiMA-PP [mass part] | 0 | 0 | 0 | 0 |
| | GMA-PP [mass part] | 0 | 10 | 0 | 0 |
| | Silane-modified PE [mass part] | 0 | 0 | 10 | 0 |
| | Total [mass part] | 100 | 100 | 100 | 100 |
| Cellulose fiber [mass part] | | 104 (silane surface treatment) | 104 | 104 | 0 |
| Water [mass part] | | 20 | 20 | 20 | 0 |
| PP (A2) content in resin composition [mass%] | | 49.0 | 44.1 | 44.1 | 100.0 |
| SiMA-PP content in resin composition [mass%] | | 0.0 | 4.9 (GMA-PP content) | 4.9 (Silane-modified PE content) | 0.0 |
| Tensile strength [MPa] | | 36 | 33 | 38 | 39 |
| Flexural strength [Mpa] | | 47 | 48 | 50 | 52 |
| Total area of aggregates of cellulose fibers [mm²/cm²] | | 0.71 | 0.75 | 0.67 | - |
| Average circular equivalent diameter of aggregates of cellulose fibers [mm] | | 0.21 | 0.21 | 0.21 | - |

As is clear from the results shown in Table 1, the resin compositions in Comparative Examples that do not satisfy the composition specified in the present invention cannot provide a resin formed body capable of achieving both the tensile strength and the appearance at the same time at a high level.

The resin composition obtained by performing melt-mixing without using water shown in Comparative Example 1 showed further improved tensile strength and flexural strength compared to those of Reference Example 1; however, the total area of aggregates was larger than 1.00 mm²/cm², and the appearance was inferior.

The resin composition obtained by performing melt-mixing without containing an alkoxysilane-modified polypropylene resin and without using water shown in Comparative Example 2 showed inferior mechanical strength to that of Reference Example 1. Further, the total area of aggregates was larger than 1.00 mm²/cm², and the appearance was inferior.

The resin composition not blended with an alkoxysilane-modified polypropylene resin shown in Comparative Example 3 showed inferior mechanical strength to that of Reference Example 1, even though melt-mixing was performed using water.

The resin composition using cellulose fibers surface-treated with a silane coupling agent in place of an alkoxysilane-modified polypropylene resin shown in Comparative Example 4 showed inferior mechanical strength to that of Reference Example 1.

The resin compositions obtained by using other modified resins in place of an alkoxysilane-modified polypropylene resin shown in Comparative Examples 5 and 6 showed inferior mechanical strength to that of Reference Example 1.

As described above, all of the resin compositions of Comparative Examples 2 to 6, which did not use an alkoxysilane-modified polypropylene resin, showed inferior mechanical strength to that of Reference Example 1, which used a polypropylene resin alone.

In contrast, the resin compositions of Examples 1 to 10 were excellent in tensile strength, flexural strength, and appearance characteristics, and could give resin formed bodies capable of achieving both mechanical strength and appearance characteristics at the same time at a high level.

Here, compared to the resin composition of Comparative Example 1 obtained by performing melt-mixing without using water, in the resin composition of Example 1 containing the same amount of cellulose fibers, the total area of aggregates of the cellulose fibers is suppressed to less than half. Further, compared to the resin composition of Comparative Example 1, in the resin compositions of Examples 6 and 7 in which the content of the alkoxysilane-modified polypropylene resin is reduced to 1/5 or the content of the alkoxysilane-modified polypropylene resin is reduced to 1/2, the total area of aggregates of the cellulose fibers is kept sufficiently low. Moreover, compared to the resin composition of Comparative Example 1, in Examples 4 and 5 in which a larger amount (about 1.5 to 2.3 times) of cellulose fibers are blended, the total area of aggregates of the cellulose fibers is more suppressed than the resin composition of Comparative Example 1. In addition, the mechanical strength of all of the resin compositions of these Examples is effectively increased. These results clearly indicate the special effect of melt-kneading a thermoplastic resin containing a combination of a polyolefin resin and an alkoxysilane-modified polypropylene resin, and a large amount of cellulose fibers in the presence of water.

Having described our invention as related to the present embodiments, it is our intention that the invention not be limited by any of the details of the description, unless otherwise specified, but rather be construed broadly within its spirit and scope as set out in the accompanying claims.

The present application claims priority of Patent Application No. 2022-054017, filed in Japan on March 29, 2022, which is herein incorporated by reference as part of the present specification.

## Claims

1. A cellulose fiber reinforced resin composition, comprising:
a thermoplastic resin containing a polyolefin resin and an alkoxysilane-modified polypropylene resin; and
101 to 400 mass parts of cellulose fibers based on 100 mass parts of the thermoplastic resin,
wherein, in planar view observation, a total area of aggregates of the cellulose fibers is 1.00 mm²/cm² or less.

2. The cellulose fiber reinforced resin composition according to Claim 1, wherein the alkoxysilane-modified polypropylene resin is a graft-modified product of a polypropylene resin which is obtainable by using a silane coupling agent having a group containing an ethylenically unsaturated group and an alkoxysilyl group.

3. The cellulose fiber reinforced resin composition according to Claim 1 or 2, wherein, in the cellulose fiber reinforced resin composition, a content of the alkoxysilane-modified polypropylene resin is 0.1 to 20 mass%.

4. The cellulose fiber reinforced resin composition according to any one of Claims 1 to 3, wherein the cellulose fibers are unmodified cellulose fibers.

5. The cellulose fiber reinforced resin composition according to any one of Claims 1 to 4, wherein the cellulose fibers are a plant-derived cellulose fiber.

6. The cellulose fiber reinforced resin composition according to any one of Claims 1 to 5, wherein the polyolefin resin contains a polypropylene resin.

7. The cellulose fiber reinforced resin composition according to any one of Claims 1 to 6, wherein a flexural strength of the cellulose fiber reinforced resin composition is higher than a flexural strength of the polyolefin resin.

8. The cellulose fiber reinforced resin composition according to any one of Claims 1 to 7, wherein the total area of aggregates of the cellulose fibers is 0.15 to 0.90 mm²/cm².

9. The cellulose fiber reinforced resin composition according to any one of Claims 1 to 7, wherein the content of the cellulose fibers based on 100 mass parts of the thermoplastic resin is 101 mass parts or more and less than 110 mass parts, the total area of the aggregates of the cellulose fibers is 0.15 to 0.80 mm²/cm², and [the content of the cellulose fibers]/[the content of the alkoxysilane-modified polypropylene resin] is 5 to 55.

10. The cellulose fiber reinforced resin composition according to any one of Claims 1 to 7, wherein the content of the cellulose fibers based on 100 mass parts of the thermoplastic resin is 110 mass parts or more and less than 130 mass parts, the total area of the aggregates of the cellulose fibers is 0.15 to 0.80 mm²/cm², and [the content of the cellulose fibers]/[the content of the alkoxysilane-modified polypropylene resin] is 5 to 55.

11. The cellulose fiber reinforced resin composition according to any one of Claims 1 to 7, wherein the content of the cellulose fibers based on 100 mass parts of the thermoplastic resin is 130 mass parts or more and less than 150 mass parts, the total area of the aggregates of the cellulose fibers is 0.15 to 0.80 mm²/cm², and [the content of the cellulose fibers]/[the content of the alkoxysilane-modified polypropylene resin] is 5 to 55.

12. The cellulose fiber reinforced resin composition according to any one of Claims 1 to 7, wherein the content of the cellulose fibers based on 100 mass parts of the thermoplastic resin is 150 mass parts or more and less than 200 mass parts, the total area of the aggregates of the cellulose fibers is 0.20 to 1.00 mm²/cm², and [the content of the cellulose fibers]/[the content of the alkoxysilane-modified polypropylene resin] is 6 to 20.

13. The cellulose fiber reinforced resin composition according to any one of Claims 1 to 7, wherein the content of the cellulose fibers based on 100 mass parts of the thermoplastic resin is 200 mass parts or more and less than 280 mass parts, the total area of the aggregates of the cellulose fibers is 0.20 to 1.00 mm²/cm², and [the content of the cellulose fibers]/[the content of the alkoxysilane-modified polypropylene resin] is 6 to 20.

14. A cellulose fiber reinforced resin formed body, which is obtainable by using the cellulose fiber reinforced resin composition according to any one of Claims 1 to 13.

15. A method of producing the cellulose fiber reinforced resin composition according to any one of Claims 1 to 13, comprising a step of melt-mixing the thermoplastic resin and the cellulose fibers in the presence of water.
